Europäisches Patentamt

European Patent Office

Office européen des brevets

(19)

(11) **EP 1 315 026 A1**

(12) **DEMANDE DE BREVET EUROPEEN**

(43) Date de publication:
**28.05.2003 Bulletin 2003/22**

(51) Int Cl.⁷: **G02F 1/31**, G02F 1/1347

(21) Numéro de dépôt: **02292610.9**

(22) Date de dépôt: **22.10.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **25.10.2001 FR 0113797**

(71) Demandeur: **Corvis France R&D**
**22300 Lannion (FR)**

(72) Inventeur: **Plouzennec, Loig**
**22700 Perros Guirec (FR)**

(74) Mandataire: **Callon de Lamarck, Jean-Robert et al**
**Cabinet Régimbeau**
**20, rue de Chazelles**
**75847 Paris cedex 17 (FR)**

(54) **Dispositif optique à routage de polarisation**

(57)    L'invention concerne un dispositif optique à routage de polarisation présentant au moins une entrée (1 ; 2) et au moins une sortie (3 ; 4), ce dispositif incluant un transformateur de polarisation (7 ; 17) apte à modifier de façon commandée la polarisation des signaux optiques qui le traversent et au moins un séparateur/combineur (5 ; 6) apte à séparer ou combiner les signaux entrant ou sortant du transformateur (7), caractérisé en ce que le transformateur de polarisation (7) comprend au moins une première cellule à cristaux liquides (8 ; 18) constituée d'un matériau apte à être commandé pour moduler les directions des axes neutres de la cellule et une deuxième cellule à cristaux liquides (9, 19), en série avec la première cellule, constituée soit d'un matériau apte à être commandé pour moduler les directions des axes neutres de la cellule, soit d'un matériau apte à être commandé pour moduler la biréfringence de la cellule.

FIG.3

## Description

La présente invention concerne les réseaux de télécommunication optique basés sur la transmission d'une seule porteuse optique ou du type WDM (Wavelength Division Multiplexing). Plus précisément, l'invention concerne les noeuds de commutation spatiale basés sur un routage de polarisation.

ARRIERE-PLAN TECHNOLOGIQUE

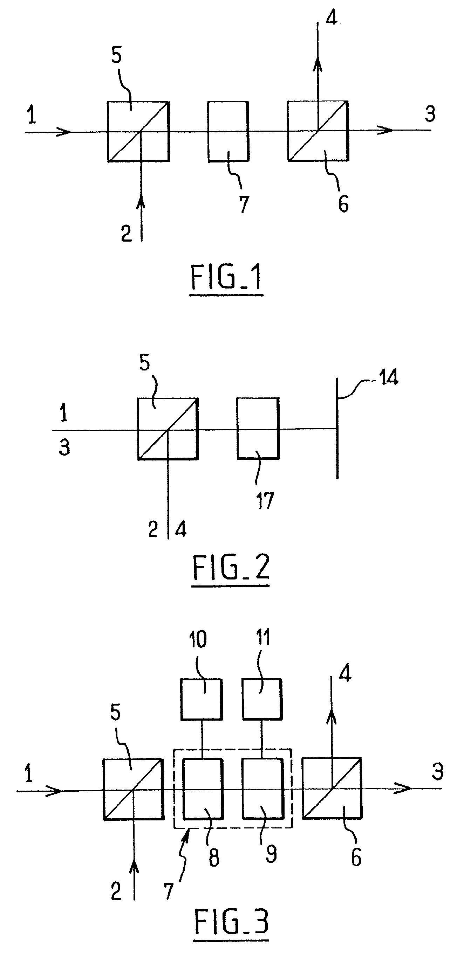

La figure 1 est un schéma simplifié d'un noeud de commutation 2×2 à routage de polarisation. Ce noeud de commutation permet d'interconnecter deux entrées 1 et 2 à deux sorties 3 et 4. Il comprend deux séparateurs/combineurs de polarisations 5 et 6 entre lesquels est intercalé un transformateur de polarisation 7. Le séparateur/combineur 5 combine les signaux optiques arrivant sur les entrées 1 et 2 en fonction de leur état de polarisation. Des signaux optiques présentant des états de polarisation orthogonaux l'un par rapport à l'autre et parallèles aux états propres du séparateur/combineur 5 sont multiplexés spatialement dans la direction de sortie du séparateur/combineur 5 vers le séparateur/combineur 6.

Le transformateur 7 est un modulateur de polarisation, il permet de modifier de façon commandée la polarisation des signaux issus du séparateur/combineur de polarisation 5.

Par exemple, si le transformateur 7 ne modifie pas la polarisation des signaux transmis par le séparateur/combineur 5 alors, le montage à routage de polarisation est à l'état « barre ». Le signal multiplexé sera transmis par le séparateur/combineur de manière à ce que le signal issu de l'entrée 1 soit transmis sur la sortie 3 du séparateur/combineur 6 et le signal issu de l'entrée 2 soit transmis sur la sortie 4.

En revanche, si le transformateur 7 introduit une rotation de π/2 des états de polarisation des signaux transmis, le montage à routage de polarisation est à l'état « croisé ». Les signaux se trouvent alors parallèles aux états propres de polarisation du séparateur/combineur 6 mais de manière inversée par rapport au cas précédent. Dans ce cas, le signal issu de l'entrée 1 sera transmis sur la sortie 4 du séparateur/combineur 6 et le signal issu de l'entrée 2 sera transmis sur la sortie 3.

Les états intermédiaires aux états « barre » et « croisé » (i.e. les états dans lesquels la transformation induite est différente de l'identité ou de π/2) permettent de diffuser les entrées 1 et 2 sur chacune des sorties 3 et 4. Ces états intermédiaires permettent aussi de réaliser une égalisation, c'est-à-dire de faire varier continûment les pertes de connexion d'une entrée vers une sortie.

Un repliement des montages de la figure 1 est possible. Ce repliement est schématisé sur la figure 2. Ce montage comprend un élément réfléchissant 14 qui renvoie les faisceaux lumineux issus d'un transformateur 17 de manière à ce que ceux-ci traversent à nouveau le transformateur 17 et le séparateur/combineur. Ce montage utilise un seul séparateur/combineur de polarisation pour multiplexer les signaux en entrée et séparer les signaux en sortie.

Différents types de transformateurs de polarisation existent. Les transformateurs employés couramment sont constitués par des cellules à cristaux liquides. Ces cellules sont des modulateurs de phase anisotropes. Une tension électrique appliquée sur une cellule permet de commander l'orientation de l'ellipsoïde des indices du matériau de la cellule. Ainsi suivant la configuration du montage dans lequel est insérée la cellule, on peut obtenir un modulateur de phase et/ou un transformateur de polarisation.

Les modulateurs de polarisation à cristaux liquides les plus connus sont des lames à retard variable constituées de cristaux liquides de type nématique ou de type smectique, en particulier les lames de type smectique C* stabilisé par la surface (désignées sous l'abréviation SSFLC pour Surface Stabilised Ferro-electric Liquid Crystal).

Ces transformateurs à cristaux liquides nématiques permettent une modulation de polarisation continue mais relativement lente (temps de réponse de quelques millisecondes). Les transformateurs de type SSFLC permettent quant à eux une modulation binaire mais rapide (temps de réponse de l'ordre de la microseconde).

Un inconvénient est que la transformation induite par de tels transformateurs constitués par une lame biréfringente est sensible à l'état de polarisation du signal incident. En effet, la rotation de l'état de polarisation induite par une cellule à cristaux liquides dépend de l'angle entre l'état de polarisation du signal incident et l'axe rapide de la cellule. Une erreur d'alignement induit une diaphotie entre les chemins due à un mauvais routage du signal.

Un autre inconvénient des transformateurs utilisant une cellule à cristaux liquides est qu'ils présentent un fonctionnement chromatique, c'est à dire que la transformation de polarisation qu'ils opèrent est dépendante de la longueur d'onde du signal qui les traverse. Il en résulte une diaphotie entre les chemins due à un mauvais routage du signal.

Un but de l'invention est de proposer un point de connexion optique pouvant être rendu insensible à l'état de polarisation des signaux entrant.

Un autre but de la présente invention est de proposer un noeud de routage optique permettant à la fois de réaliser une diffusion ou une égalisation ou/et une commutation rapide.

Un autre but de l'invention est de proposer un point de connexion optique permettant de limiter les effets chromatiques du noeud de commutation.

RESUME DE L'INVENTION

A cet effet, l'invention propose un dispositif optique à routage de polarisation présentant au moins une entrée et au moins une sortie, ce dispositif incluant un transformateur de polarisation apte à modifier de façon commandée la polarisation des signaux optiques qui le traversent et au moins un séparateur/combineur apte à séparer ou combiner les signaux entrant ou sortant du transformateur, caractérisé en ce que le transformateur de polarisation comprend au moins une première cellule à cristaux liquides constituée d'un matériau apte à être commandé pour moduler les directions des axes neutres de la cellule et une deuxième cellule à cristaux liquides, en série avec la première cellule, constituée soit d'un matériau apte à être commandé pour moduler les directions des axes neutres de la cellule, soit d'un matériau apte à être commandé pour moduler la biréfringence de la cellule.

Le fait que le transformateur de polarisation comprenne plusieurs cellules à cristaux liquides permet d'éliminer la sensibilité du dispositif de routage à l'état de polarisation du ou des signal(aux) incident(s). En effet, il est possible de commander les cellules de manière à ce que la rotation globale de l'état de polarisation reste constante même si la direction de l'état de polarisation incident varie par rapport aux axes des cellules. Dans ces conditions, lors du montage du dispositif, il n'est plus nécessaire d'aligner précisément les axes des cellules du transformateur avec les axes du ou des séparateur (s)/combineur(s).

De plus, dans le cas où le dispositif présente plusieurs sorties, les signaux émis sur chaque sortie étant complémentaires, la connaissance de l'état de l'une des sorties suffit à déterminer l'état de chaque sortie. Cette caractéristique permet de simplifier le contrôle ou supervision du dispositif (ou « monitoring » selon la terminologie anglo-saxonne généralement utilisée par l'homme du métier), ce qui est particulièrement avantageux lorsque celui-ci est inclus dans une architecture plus globale intégrant plusieurs noeuds de commutation.

Un tel dispositif permet aussi de réaliser une diffusion contrôlée des entrées du montage sur les sorties, ce qui n'est pas possible avec une cellule unique de type SSFLC. Il suffit pour cela de commander une deuxième cellule pour modifier la polarisation des signaux qui la traversent.

Un tel dispositif permet aussi de réaliser une égalisation contrôlée, de la puissance d'un signal transmis d'une entrée sur une sortie, ce qui n'est pas possible avec une cellule unique de type SSFLC. Il suffit pour cela de commander une deuxième cellule pour modifier la polarisation des signaux qui la traversent.

Le dispositif de l'invention peut présenter les caractéristiques suivantes prises seules ou en combinaison :

- il présente deux entrées, il inclut un séparateur/combineur d'entrée recevant les signaux optiques sur les entrées. Les signaux optiques traversent successivement le séparateur/combineur d'entrée et le transformateur de polarisation.
- il présente deux sorties, il inclut un séparateur/combineur de sortie répartissant les signaux optiques sur les sorties. Les signaux optiques traversent successivement le transformateur de polarisation et le séparateur/combineur de sortie.

Ainsi, il est possible de réaliser des dispositifs présentant une entrée et une sortie (1×1), entrée et deux sorties (1×2), deux entrées et une sortie (2×1) ou encore deux entrées et deux sorties (2×2). Ces dispositifs à routage de polarisation 2×2 peuvent être utilisés pour réaliser des architectures étagées ou mono-étage présentant un plus grand nombre d'entrées et de sorties.

Les matériaux constitutifs des cellules à cristaux liquides sont de préférence choisis parmi les cristaux liquides smectiques C* stabilisés par la surface et/ou les cristaux liquides nématiques.

Dans le cas où le dispositif comprend au moins une cellule à cristaux liquides smectiques C*, il présente l'avantage de permettre une commutation rapide (pouvant atteindre quelques microsecondes) par commutation de la cellule smectique C*. En outre, ce type de cellule présente l'avantage de pouvoir être bistable.

Dans une mise en oeuvre de l'invention, la deuxième cellule est une cellule de type smectiques C* stabilisés par la surface.

Dans une mise en oeuvre de l'invention, la première cellule est une cellule de type nématique.

Dans une mise en oeuvre de l'invention, le dispositif optique à routage de polarisation comprend deux cellules à cristaux liquides et l'axe rapide de la première cellule est aligné avec l'axe rapide de la deuxième cellule.

Dans cette mise en oeuvre, le retard induit par la première lame est compensé par la deuxième lame. Ce qui permet de limiter la diaphotie due à la sensibilité à la longueur d'onde des cellules.

Ce dispositif permet en outre une compensation du chromatisme du transformateur de polarisation en commandant le retard induit par la cellule nématique lorsque les axes lents sont initialement alignés ou/et lorsque des erreurs sont commises sur les longueurs d'onde nominales des cellules. Ce qui, dans le dernier cas, permet de limiter la diaphotie due aux éventuelles erreurs de fabrication des cellules.

L'invention propose en outre un procédé de routage de faisceaux optiques, selon lequel on introduit les faisceaux dans un noeud de commutation optique présentant deux entrées et deux sorties et comprenant un transformateur de polarisation comprenant au moins deux cellules à cristaux liquides en série, caractérisé en ce qu'on commande une des cellules du transformateur pour commuter le faisceau d'une sortie à l'autre et en ce qu'on commande une autre des cellules du transformateur pour moduler continûment les états de polarisation des faisceaux et diffuser les faisceaux entrant sur les sorties.

Le procédé proposé par l'invention permet avantageusement d'utiliser les propriétés des différentes cellules du transformateur :

- on utilise une cellule à commutation rapide (par exemple une cellule de type SSFLC) lorsqu'on souhaite commuter les signaux optiques d'une sortie sur l'autre,
- on utilise une cellule à modulation continue de biréfringence (par exemple une cellule de type nématique) pour commander la diffusion ou l'égalisation des signaux sur les sorties du noeud ou pour compenser le chromatisme du transformateur.

BREVE DESCRIPTION DES DESSINS

D'autres caractéristiques et avantages ressortiront encore de la description qui suit, laquelle est purement illustrative et non limitative et doit être lue en regard des figures annexées parmi lesquelles :

- les figure 1 et 2 déjà commentées, sont des représentations schématiques de noeuds de commutation 2×2 à routage de polarisation,
- la figure 3 est une représentation schématique d'un exemple de dispositif conforme à l'invention,
- les figures 4 et 5 sont des représentations dans un diagramme des rotations des ellipsoïdes des indices respectivement dans une cellule nématique et dans une cellule SSFLC,
- les figures 6 et 7 représentent l'évolution des états de polarisation de la lumière sur la sphère de Poincaré au cours de sa transmission à travers le transformateur du dispositif de la figure 1, la cellule nématique étant demi-onde,
- les figures 8 et 9 représentent l'évolution des états de polarisation de la lumière sur la sphère de Poincaré au cours de sa transmission à travers le transformateur du dispositif de la figure 1, pour une gamme de variation du retard de la cellule nématique égale à $\pi$,
- les figures 10 et 11 donnent la répartition de la puissance transmise sur les sorties du séparateur/combineur du dispositif de la figure 1 en fonction du retard $\delta$ induit par la cellule nématique,
- les figures 12 et 13 représentent la répartition de la puissance transmise sur les sorties du séparateur/combineur pour une rotation des états de polarisation entrants lorsque la cellule smectique est non-commutée et lorsqu'elle est commutée,
- la figure 14 est la courbe de transmission de la puissance selon l'état ON ou OFF de la cellule smectique en fonction de la longueur d'onde du faisceau transmis,
- les figures 15 et 16 représente l'évolution des états de polarisation de la lumière sur la sphère de Poincaré et illustre l'indépendance du fonctionnement du transformateur global de la longueur d'onde du faisceau,
- la figure 17 représente schématiquement un montage insensible à l'état de polarisation des faisceaux entrants,
- les figures 18 à 20 représentent schématiquement des montages similaires à celui de la figure 16 mais repliés,
- la figure 21 représente schématiquement un montage dans lequel les directions de propagations des entrées sont parallèles,
- les figures 22 et 23 représentent schématiquement un dispositif de commutation dans lequel les dispositifs des figures précédentes ont été spatialement multipliés afin de collectiviser spatialement le montage, autrement dit, ils ont été « pixellisés ».

DESCRIPTION DETAILLEE D'UNE MISE EN OEUVRE DE L'INVENTION

Sur la figure 3, on a représenté un noeud de commutation similaire à celui de la figure 1, mais dans lequel le transformateur de polarisation 7 est composé d'une cellule de type SSFLC 8 suivie d'une cellule de type nématique 9. Les cellules 8 et 9 sont commandées respectivement par des modules de commande 10 et 11. Ces modules permettent d'appliquer sur chaque cellule 8 et 9 une tension variable. Cette tension crée un champ électrique dans le cristal liquide qui entraîne la réorientation des molécules de ce cristal. Le contrôle de l'orientation des molécules permet de modifier l'orientation de l'ellipsoïde des indices du matériau. Par conséquent, le signal optique traversant la cellule est soumis à une biréfringence qui varie avec la tension appliquée à la cellule. Suivant la configuration du montage où est insérée la cellule, on peut obtenir un modulateur de phase et/ou un modulateur de polarisation.

On notera que l'ordre de positionnement des cellules 8 et 9 est indifférent pour le fonctionnement du noeud de commutation.

COMMUTATION DU TRANSFORMATEUR

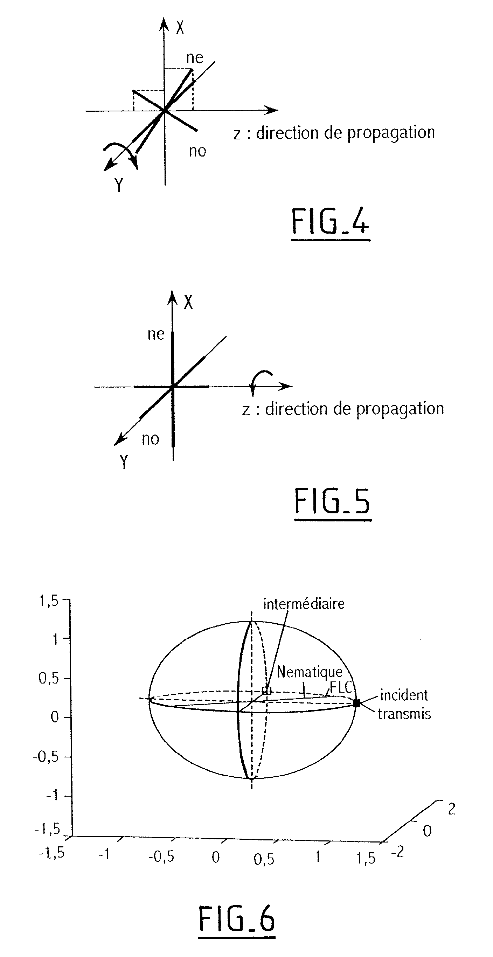

Les figures 4 et 5 sont des représentations dans un diagramme des rotations des ellipsoïdes des indices respectivement dans une cellule de type nématique et dans une cellule de type SSFLC. Sur ces diagrammes, la direction d'axe z est la direction de propagation de la lumière à travers le cristal liquide. $n_0$ est l'indice ordinaire et $n_E$ est l'indice extraordinaire du cristal.

Dans un cristal liquide nématique (figure 4), la tension appliquée entraîne la rotation de l'ellipsoïde des indices autour de l'axe y, perpendiculaire à la direction de propagation de la lumière. Par conséquent, la tension appliquée induit une modulation de la biréfringence vue par l'onde polarisée.

Dans le cristal liquide SSFLC (figure 5), la tension appliquée entraîne une rotation de l'ellipsoïde des indices autour de l'axe z correspondant à la direction de propagation de la lumière. La biréfringence ne varie pas, seules les directions des lignes neutres varient et ce d'un angle égal à deux fois l'angle de tilt du cristal liquide.

On commande l'orientation des axes neutres de la cellule nématique 8 de manière à ce qu'elle passe d'un état isotrope (ou « onde ») à un état « demi-onde ».

Pour un état « barre » ou « croisé » du point de connexion, les axes des cellules sont alignés. Les états de polarisation sont orientés à $\pi/8$ modulo ($\pi/2$) des axes des cellules 8 et 9.

La cellule SSFLC 9 fonctionne comme un commutateur permettant d'induire alternativement une rotation des états de polarisation d'un angle de $\pi/4$ ou de $-\pi/4$.

La cellule nématique 8 fonctionne comme un modulateur de biréfringence accordable, elle induit un retard $\delta$ du signal selon la direction x de polarisation.

La figure 6 représente l'évolution des états de polarisation de la lumière sur la sphère de Poincaré au cours de sa transmission à travers les cellules successives, la cellule nématique 8 étant demi-onde et la cellule SSFLC 9 étant dans son état non-commuté. Le faisceau incident présente un état de polarisation rectiligne. Le passage à travers la cellule nématique entraîne une rotation de son état polarisation de $\pi/4$. Le faisceau intermédiaire se propage entre la cellule nématique et la cellule SSFLC. Le passage de ce faisceau à travers la cellule SSFLC entraîne une rotation de son état de polarisation de $-\pi/4$. Par conséquent, l'état de polarisation du faisceau transmis est similaire à celui du faisceau incident. Dans cette configuration, le transformateur 7 global ne modifie pas l'état de polarisation du faisceau qui le traverse. La matrice de Jones du transformateur global 7 est en effet

$$\begin{pmatrix} 1 & 0 \\ 0 & 1 \end{pmatrix}.$$

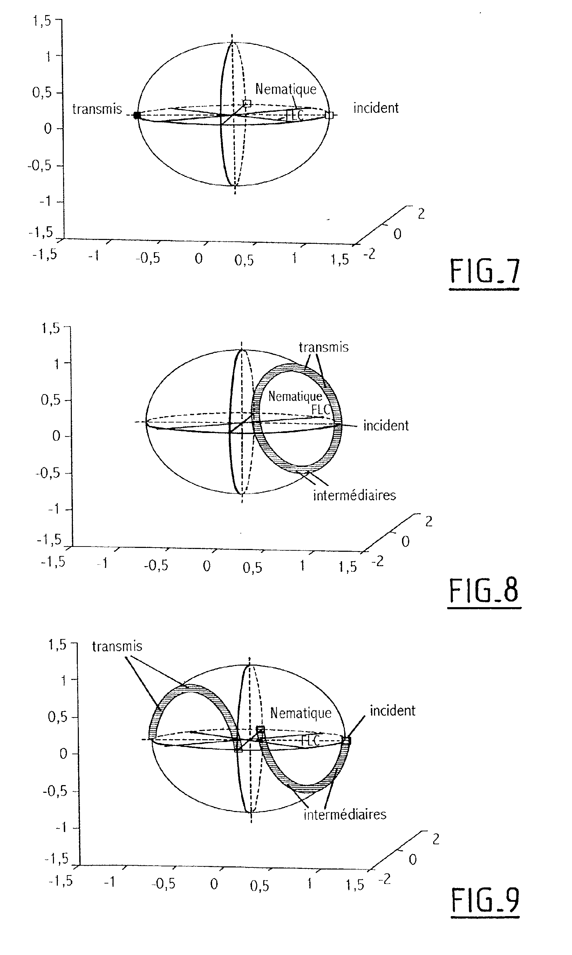

La figure 7 représente l'évolution des états de polarisation de la lumière sur la sphère de Poincaré au cours de sa transmission à travers les cellules successives, la cellule nématique 8 étant demi-onde et la cellule SSFLC étant dans son état commuté. Le passage à travers la cellule nématique du faisceau incident polarisé rectilignement entraîne une rotation de son état polarisation de $\pi/4$. Le faisceau intermédiaire se propage entre la cellule nématique et la cellule SSFLC. Le passage de ce faisceau à travers la cellule smectique entraîne une rotation de son état de polarisation de $\pi/$

4. Dans cette configuration, le transformateur 7 global entraîne une rotation de l'état de polarisation du faisceau de $\pi/2$. La matrice de Jones du transformateur global 7 est en effet

$$\begin{pmatrix} 0 & 1 \\ -1 & 0 \end{pmatrix}.$$

Le dispositif de l'invention présente l'avantage de permettre une commutation rapide (pouvant descendre jusqu'à quelques microsecondes). La cellule smectique permet ainsi de commander le routage d'un état de polarisation alternativement sur l'une des deux sorties du montage, ces états étant approximativement orthogonaux et propres au séparateur/combineur de polarisation de sortie.

Cette caractéristique est particulièrement avantageuse lorsqu'on désire pouvoir commuter rapidement un signal d'une voie sur l'autre. Par exemple, pour des raisons de sécurité de transmission, une voie optique doit pouvoir prendre rapidement le relais sur une autre voie devenu indisponible. Dans ce cas, il est conseillé que la part de la commutation optique dans l'opération de restauration soit inférieure à une milliseconde.

DIFFUSION DES ENTREES SUR LES SORTIES

Lorsque la cellule nématique est commandée de manière à induire un retard $\delta$ supplémentaire, les matrices de Jones du transformateur 7 deviennent :

$$\begin{pmatrix} 1 & 0 \\ 0 & -e^{j\delta} \end{pmatrix}$$

lorsque la cellule smectique 9 est en état non-commuté,

$$-\begin{pmatrix} 0 & 1 \\ e^{j\delta} & 0 \end{pmatrix}$$

lorsque la cellule smectique 9 est en état commuté.

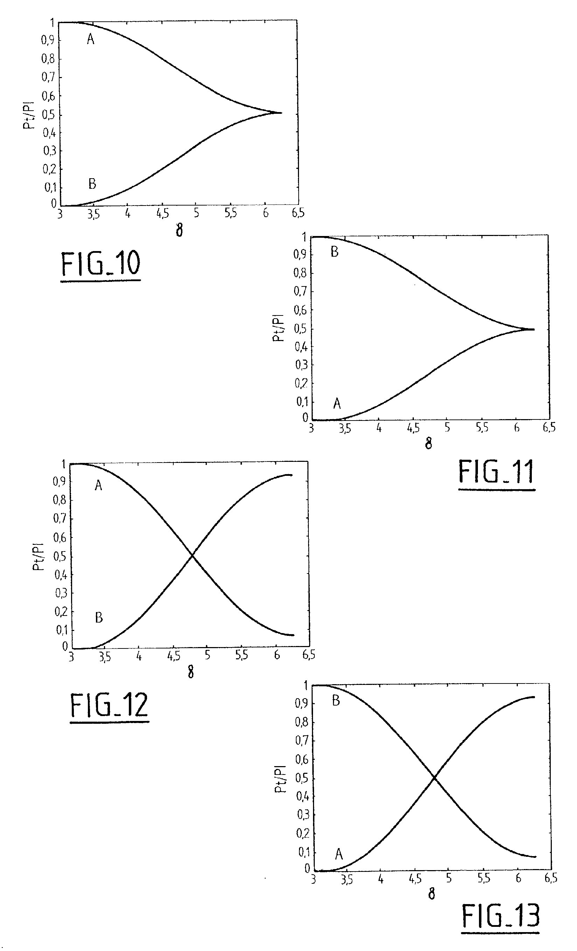

Les figures 8 et 9 représentent la modification des états de polarisation du faisceau transmis à travers le transformateur global 7 lorsque la cellule nématique est commandée de manière à induire un retard $\delta$ compris dans une gamme [$k\pi$, $(k+1)\pi$], k entier. Sur la figure 11, la cellule smectique est dans son état non-commuté tandis que sur la figure 12, elle est dans son état commuté.

La cellule smectique 9 permet de réaliser une commutation rapide (de l'ordre de la microseconde), c'est à dire de commander alternativement la transmission des faisceaux incidents de chaque entrée 1 ou 2 vers l'une des sorties 3 ou 4 du noeud.

En parallèle, la cellule nématique 8 permet de commander de façon continue la répartition des faisceaux incidents des entrées 1 et 2 vers les sorties 3 et 4. Les figures 10 et 11 donnent la répartition de la puissance transmise sur les sorties 3 et 4 du séparateur/combineur 6 en fonction du retard δ (en radians) induit par la cellule nématique 8. Sur la figure 10, la cellule smectique 9 est en état non-commuté. Sur la figure 11, la cellule smectique est en état commuté. L'état A correspond à l'état de polarisation du faisceau incident sur l'entrée 1 et l'état B correspond à l'état du faisceau incident sur l'entrée 2. Sur la sortie 3, les signaux sont analysés par un polariseur passant dans la direction de l'état A et sur la sortie 4, les signaux sont analysés par un polariseur passant dans la direction de l'état B. On constate que pour chacun des états incidents, les effets du noeud lorsque la cellule 9 est non-commutée ou commutée sont inversés et complémentaires.

Par ailleurs, on constate sur les figures 10 et 11 qu'il n'est pas possible de transférer la puissance du faisceau issu de l'une des sorties 3 ou 4 sur l'autre sortie en faisant varier le retard δ induit par la cellule nématique 8. A cet effet, il est nécessaire de commuter la cellule SSFLC 9 pour obtenir une variation de puissance transmise d'une entrée vers l'une des sorties supérieure à 3dB.

Afin d'obtenir une gamme d'égalisation plus grande ne nécessitant pas une commutation du SSFLC, une solution consiste à introduire une rotation des états de polarisation incidents sur le transformateur, c'est à dire une rotation des axes des cellules par rapport aux axes propres des séparateurs/combineurs. Ceci est permis par l'insensibilité à la polarisation du transformateur. Les figures 12 et 13 représentent la répartition de la puissance transmise sur les sorties 3 et 4 pour une rotation des états de polarisation A et B de π/3 lorsque la cellule smectique est non-commutée et lorsqu'elle est commutée.

Le dispositif de l'invention permet de réaliser une diffusion contrôlée des entrées du montage sur les sorties, ce qui n'était pas possible avec une cellule smectique unique. Il suffit pour cela de commander la cellule nématique pour modifier la polarisation des signaux qui la traversent. Cette caractéristique peut permettre par exemple d'égaliser les intensités des signaux transmis dans toutes les gammes de fréquence.

COMPENSATION DE LA SENSIBILITE A LA POLARISATION

La combinaison des deux cellules nématique 8 et smectique 9 permet de rendre le point de connexion insensible à la polarisation.

La matrice de Jones du transformateur global 7 est en effet

$$\begin{pmatrix} 1 & 0 \\ 0 & 1 \end{pmatrix}$$

lorsque la cellule SSFLC est non commutée et

$$\begin{pmatrix} 0 & 1 \\ -1 & 0 \end{pmatrix}$$

lorsque la cellule SSFLC est commutée.

COMPENSATION DU CHROMATISME DU TRANFORMATEUR

Si l'axe rapide de la cellule SSFLC 9 est aligné avec l'axe lent de la cellule nématique 8, le transformateur global 7 est parfaitement achromatique. Si les axes rapides sont alignés, on commande la cellule nématique 8 pour qu'elle induise un déphasage égal à

$$2\pi \times \left(1 - \frac{\lambda_0}{\lambda}\right),$$

où $\lambda_0$ est la longueur d'onde nominale de la cellule smectique et $\lambda$ est la longueur d'onde du faisceau transmis. Cette correction du déphasage permet de préserver l'achromatisme du transformateur 7.

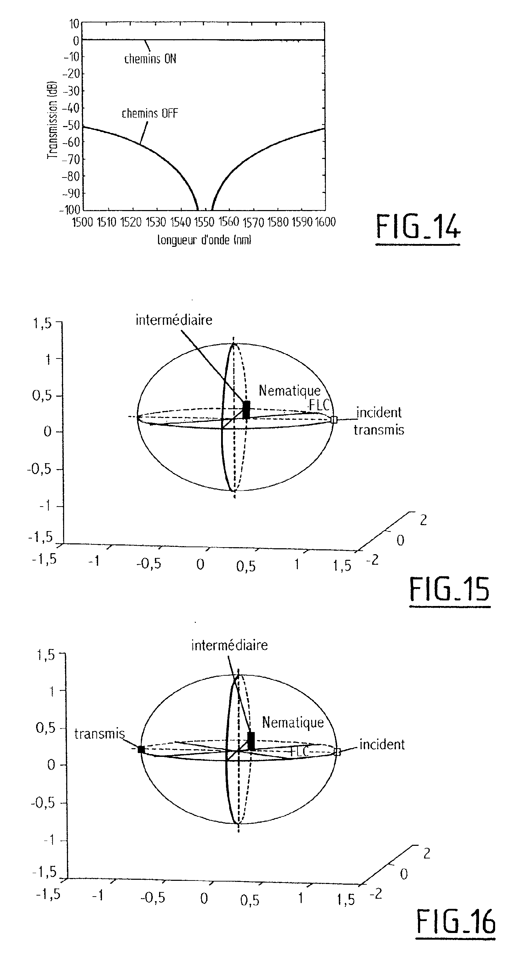

Lorsque la cellule SSFLC est commutée (elle induit une rotation de -π/4 de l'état de polarisation), l'achromatisme ne peut être qu'approché. On vérifie que le minimum de variation des transmissions des chemins correspond aux conditions précédentes (alignement des axes et correction du retard par la cellule nématique) et que le chromatisme du transformateur 7 constitué des deux cellules 8 et 9 est plus faible que le chromatisme d'une lame demi-onde. La figure 14 montre les courbes de transmission en puissance sur les chemins ON et OFF en fonction de la longueur d'onde des signaux optiques lorsque la cellule SSFLC est commutée.

Si la rotation de l'ellipsoïde des indices de la cellule smectique 9 est de π/4, on commande la cellule nématique lors de la commutation de la cellule smectique de manière à améliorer encore le contraste « ON/OFF », c'est à dire le rapport entre les puissances transmises dans l'état barre et croisé sur une sortie et issue d'une même entrée.

Les figures 15 et 16 représentent dans la sphère de Poincaré la modification des états de polarisation transmis durant leur traversée des deux cellules 8 et 9 respectivement lorsque la cellule SSFLC 8 est dans sont état commuté et lorsqu'elle est dans son état non-commuté. On peut voir la dépendance du fonctionnement de chaque cellule 8 et 9 en fonction de la longueur d'onde du faisceau. On constate que l'ellipticité de l'état de polarisation du faisceau intermédiaire varie avec la longueur d'onde. La combinaison des deux cellules 8 et 9 et si nécessaire le réglage de la cellule nématique 8 permet de rétablir une polarisation rectiligne en sortie du transformateur. Le fonctionnement du transformateur global est donc indépendant (parfaitement dans un état du noeud et approximativement dans l'autre état) de la longueur d'onde du faisceau : les faisceaux transmis sont identiques aux faisceaux des figures 6 et 7.

De façon plus générale, on peut en agissant sur le retard induit par la cellule nématique 8, compenser les écarts de retard entre les cellules 8 et 9 par rapport à la valeur nominale de retard à la longueur d'onde $\lambda_0$. Des erreurs de fabrication ou des erreurs liées au vieillissement ou aux conditions d'utilisation, tel qu'une variation d'épaisseur d'une cellule, peuvent être en partie compensées de cette manière.

On peut en outre modifier la forme spectrale du filtre de la figure 14, en modifiant indépendamment les épaisseurs, ce qui revient à modifier les longueurs d'ondes nominales $\lambda_0$ de chaque cellule. Ceci peut être utile, par exemple, pour modifier la position de contraste optimal et contrôler la pente du filtre.

On prendra soin de choisir une gamme de retard $\delta$ adapté à la diffusion. Elle sera par exemple, dans le cas où les biréfringences sont de même signe, comprise entre

$$0 + k\pi + \min\left(2\pi(1 - \frac{\lambda_0}{\lambda})\right)$$

et

$$\pi + k\pi + \max\left(2\pi(1 - \frac{\lambda_0}{\lambda})\right),$$

k entier pour réduire la dépendance chromatique du filtre.

Comme on l'aura compris, le dispositif de l'invention peut être appliqué à base de matériaux électro-optiques présentant des propriétés équivalentes à celles des cellules nématiques et SSFLC : la modulation (d'axe ou de biréfringence) rapide et bistable servant à la commutation et la modulation (d'axe ou de biréfringence) continue servant à la diffusion.

En outre, le dispositif de l'invention n'est nullement limité à l'utilisation de deux cellules. On peut décomposer le transformateur en autant de cellules que souhaité. Divers travaux ont montré par exemple qu'un rotateur de polarisation pouvait être rendu achromatique par l'utilisation d'au moins trois lames. En particulier, le document WO 00/36462 déposé le 17 décembre 1999 par COLORLINK INC décrit de tels transformateurs de polarisation destinés à des applications d'affichage. Les combinaisons proposées peuvent être utilisées pour rendre achromatique le noeud de connexion décrit précédemment dans ses deux états.

MONTAGE INSENSIBLE A LA POLARISATION

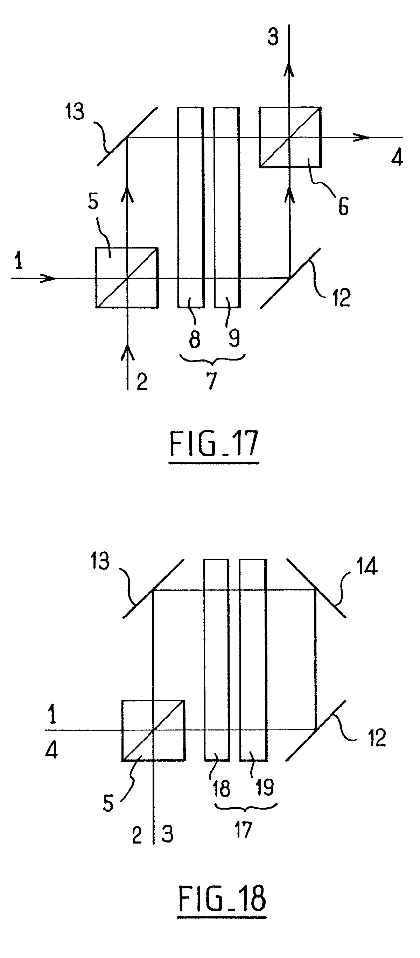

Il est possible d'appliquer l'invention à un montage de commutation insensible à la polarisation des faisceaux incidents. La figure 17 représente schématiquement un tel montage. Le montage est un interféromètre de type Mach Zehnder comprenant deux séparateurs/combineurs entre lesquels est intercalé un transformateur de polarisation 7 ainsi que deux miroirs 12 et 13. Le séparateur/combineur 5 sépare les composantes parallèles à ses états propres des signaux optiques arrivant sur les entrées 1 et 2. Les composantes des signaux optiques présentant des états de polarisation orthogonaux l'un par rapport à l'autre et parallèles aux états propres du séparateur/combineur 5 sont multiplexés spatialement dans la direction de sortie du séparateur/combineur 5 vers les miroirs 12 et 13. Les miroirs renvoient les signaux ainsi séparés vers le séparateur/combineur 6. De cette manière, les puissances transmises vers les sorties sont indépendantes des états de polarisation des signaux sur les entrées. Les miroirs peuvent être remplacés par des éléments optiques équivalents tels que des prismes à angle droit par exemple. Les deux composantes d'une onde incidente orientées suivant les axes propres du premier séparateur/combineur de polarisation sont séparées sur les bras de l'interféromètre mais traversent le même transformateur global (ou deux transformateurs de caractéristiques sensiblement identiques, chacun positionné sur un bras).

Pour prendre en compte les conditions de phase entre les signaux se combinant sur les sorties, le montage peut inclure des compensatrices non représentées sur le schéma.

MONTAGE REPLIE

Comme illustré sur la figure 18, il est également possible de « replier » le montage en remplaçant le deuxième séparateur/combineur 6 par un miroir 14 ou un prisme à angle droit. Si un transformateur 17 est placé sur les deux bras, sa conception doit prendre en compte l'aller et retour qu'y effectue la lumière. Du fait que le signal traverse deux fois le transformateur de polarisation. On peut par exemple garder la même valeur des retards que dans les montages précédents en utilisant une cellule SSFLC de tilt 45° et en orientant les directions des états de polarisation à π/4 des axes neutres des cellules.

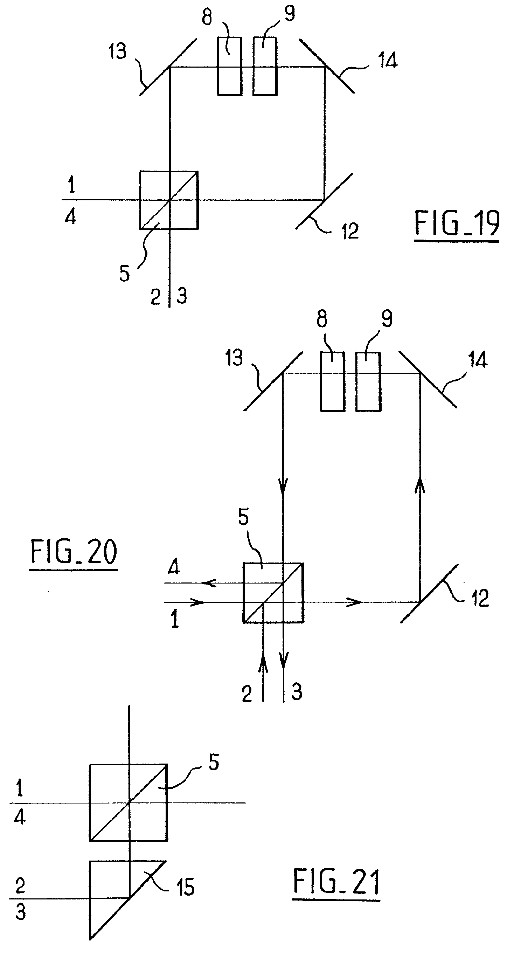

Les figures 19 et 20 représentent des variantes du montage replié de la figure 18. Sur la figure 19, le transformateur n'est porté que sur un bras du montage. Dans ce cas la lumière ne le traverse qu'une seule fois.

Sur la figure 20, le miroir 13 a été légèrement décalé de manière à de que les sorties 4 et 3 ne soient plus confondues avec les entrées 1 et 2.

Comme illustré sur la figure 21, on peut ajouter dans les montages précédents un prisme 15 à angle droit pour « paralléliser » les directions de propagation des entrées 1 et 2 et des sorties 3 et 4.

Les figures précédentes ne sont que des schémas de principe et n'impliquent ni un choix particulier de technologie d'interconnexion (espace libre ou semi-espace libre, intégré, fibré, etc.), ni un choix de géométrie (angle d'incidence, cube séparateur/combineur, etc.).

PIXELLISATION DES DISPOSITIFS DE ROUTAGE

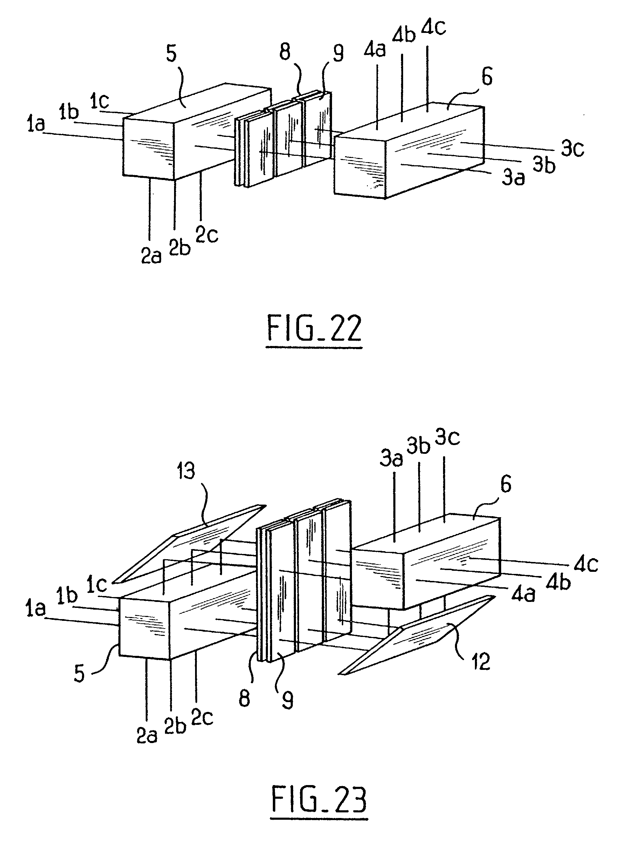

Le transformateur de polarisation peut être « pixellisé », c'est à dire que des noeuds de commutation identiques peuvent être positionnés en parallèle de manière à former un montage optique avec un nombre d'entrées et de sorties multiplié. Les figures 22 et 23 sont des schémas de principe d'un tel montage. Dans ce montage, chaque noeud de commutation présente une structure similaire à celle des noeuds représentés aux figures 3 et 16. Ces noeuds positionnés en parallèle sont indépendants et forme une structure plus générale de routage de polarisation.

L'adjonction d'étages de démultiplexage spatial des longueurs d'onde en amont et de multiplexage spatial de ces mêmes longueurs d'onde en aval d'un tel montage permet de traiter en parallèle les canaux WDM. Les sorties du ou des multiplexeurs sont les entrées du routeur et les sorties du routeur sont les entrées du ou des multiplexeurs de longueurs d'onde.

Notons que la granularité du traitement des canaux WDM peut varier: plusieurs groupes de canaux WDM peuvent être traités indépendamment.

Tout comme la réalisation du routeur de polarisation, ces étages peuvent être réalisés à l'aide de technologies différentes. Ces étages peuvent être éventuellement spatialement imbriqués dans le réseau de connexion (une partie de l'espace situé entre les séparateurs/combineurs peut être utilisée par les étages de multiplexage et de démultiplexage) pour limiter l'encombrement du routeur et/ou limiter les effets de la diffraction. La seule condition imposée ici est la séparation spatiale des canaux colorés dans le plan du transformateur de polarisation.

Notons enfin que la translation des sorties (figures 20 et 21) peut permettre d'utiliser un seul multiplexeur/démultiplexeur (on a donc un montage à 2 entrées et 2N sorties) spatial de longueur d'onde sans nécessiter un circulateur pour séparer les signaux entrants des signaux sortant.

**Revendications**

**1.** Dispositif optique à routage de polarisation présentant au moins une entrée (1 ; 2) et au moins une sortie (3 ; 4), ce dispositif incluant un transformateur de polarisation (7 ; 17) apte à modifier de façon commandée la polarisation des signaux optiques qui le traversent et au moins un séparateur/combineur (5 ; 6) apte à séparer ou combiner les signaux entrant ou sortant du transformateur (7), **caractérisé en ce que** le transformateur de polarisation (7) comprend au moins une première cellule à cristaux liquides (8; 18) constituée d'un matériau apte à être commandé pour moduler les directions des axes neutres de la cellule et une deuxième cellule à cristaux liquides (9, 19), en série avec la première cellule, constituée soit d'un matériau apte à être commandé pour moduler les directions des axes neutres de la cellule, soit d'un matériau apte à être commandé pour moduler la biréfringence de la cellule.

**2.** Dispositif selon la revendication 1, **caractérisé en ce qu'**il présente deux entrées (1,2) et inclut un séparateur/combineur d'entrée (5) recevant les signaux optiques sur les entrées (1, 2), les signaux optiques traversant successivement le séparateur/combineur d'entrée (5) et le transformateur de polarisation (7 ; 17).

**3.** Dispositif selon l'une des revendications précédentes, **caractérisé en ce qu'**il présente deux sorties (3, 4) et inclut un séparateur/combineur (6) de sortie répartissant les signaux optiques sur les sorties (3, 4), les signaux optiques traversant successivement le transformateur de polarisation (7 ; 17) et le séparateur/combineur de sortie (6).

**4.** Dispositif selon l'une des revendications précédentes, **caractérisé en ce que** les matériaux constitutifs des cellules à cristaux liquides (8, 9 ; 18, 19) sont de préférences choisis parmi les cristaux liquides smectiques C* stabilisés par la surface et/ou les cristaux liquides nématiques.

**5.** Dispositif selon l'une des revendications précédentes, **caractérisé en ce qu'**il comprend deux cellules à cristaux liquides (8, 9 ; 18, 19) et **en ce que** l'axe rapide de la première cellule (8 ; 18) est positionné aligné avec l'axe lent de la deuxième cellule (9 ; 19).

**6.** Dispositif selon l'une des revendications 1 à 4, **caractérisé en ce qu'**il comprend deux cellules à cristaux liquides (8, 9 ; 18, 19) et **en ce que** l'axe rapide de la première cellule est aligné avec l'axe rapide la deuxième cellule.

**7.** Dispositif selon l'une des revendications précédentes, **caractérisé en ce que** la deuxième cellule (9 ; 19) est de type smectique C* stabilisée par la surface.

**8.** Dispositif selon l'une des revendications précédentes, **caractérisé en ce que** la première cellule (8 ; 18) est de type nématique.

**9.** Dispositif selon les revendications 2 et 3 prises en combinaison, **caractérisé en ce qu'**il comprend un élément réfléchissant (14) qui renvoie les signaux optiques issus du transformateur (7 ; 17) de polarisation à nouveau vers celui-ci et **en ce que** le séparateur/combineur d'entrée (5) est également un séparateur/combineur de sortie (6).

**10.** Dispositif selon la revendication 9, **caractérisé en ce qu'**il forme un interféromètre de Mach Zehnder comprenant un séparateur/combineur d'entrée (5) dont les deux sorties sont envoyées chacune vers une branche de l'interféromètre, chaque branche comprenant un élément réfléchissant qui renvoie les faisceaux vers le séparateur/combineur de sortie (6).

**11.** Dispositif selon la revendication 10, **caractérisé en ce qu'**il comprend un élément réfléchissant supplémentaire (14) qui réfléchit les signaux issus de l'une des branches vers l'autre branche et **en ce que** le séparateur/combineur d'entrée (5) est également le séparateur/combineur de sortie.

**12.** Dispositif selon la revendication 11, **caractérisé en ce que** les éléments réfléchissants (12, 13, 14) sont positionnés de sorte que les entrées (1, 2) sont confondues avec les sorties (3, 4).

**13.** Dispositif selon la revendication 11, **caractérisé en ce que** les éléments réfléchissants (12, 13, 14) sont positionnés de sorte que les entrées (1, 2) sont décalées par rapport aux sorties (3, 4).

**14.** Dispositif selon l'une des revendications 10 à 13, **caractérisé en ce que** le transformateur (17) est positionné sur les deux branches de l'interféromètre.

**15.** Dispositif selon l'une des revendications 10 à 13, **caractérisé en ce que** transformateur (7) est positionné sur l'une des deux branches de l'interféromètre.

**16.** Procédé de routage de faisceaux optiques, selon lequel on introduit les faisceaux dans un dispositif de commutation optique présentant deux entrées (1, 2) et deux sorties (3, 4) et comprenant un séparateur/combineur d'entrée (5), un séparateur/combineur de sortie (6) et un transformateur de polarisation (7; 17) **caractérisé en ce que** le transformateur (7 ; 17) comprenant au moins deux cellules à cristaux liquides (8, 9 ; 18, 19) en série, on commande une des cellules (9 ; 19) du transformateur (7 ; 17) pour commuter le faisceau d'une sortie à l'autre et **en ce qu'**on commande une autre des cellules (8 ; 18) du transformateur pour moduler continûment les états de polarisation des faisceaux et diffuser les faisceaux entrant sur les sorties (3, 4).

**17.** Procédé de routage de faisceaux optiques, selon lequel on introduit les faisceaux dans un dispositif de commutation optique présentant deux entrées (1, 2) et deux sorties (3, 4) et comprenant un séparateur/combineur d'entrée (5), un séparateur/combineur de sortie (6) et un transformateur de polarisation (7 ; 17), **caractérisé en ce que** le transformateur (7 ; 17) comprenant au moins deux cellules à cristaux liquides (8, 9 ; 18, 19) en série, on commande l'une des cellules (8 ; 18) du transformateur (7; 17) pour compenser les écarts de retard entre les cellules (8, 9 ; 18, 19) par rapport à un retard correspondant une valeur nominale de longueur d'onde.

**18.** Procédé selon la revendication 17, **caractérisé en ce qu'**on commande l'une des cellules (8 ; 18) de manière à induire un déphasage égal à

$$2\pi \times \left(1 - \frac{\lambda_0}{\lambda}\right),$$

où $\lambda_0$ est la longueur d'onde nominale de l'autre cellule (9 ; 19) et $\lambda$ est la longueur d'onde du faisceau transmis

**19.** Ensemble de routage de canaux optiques comprenant un démultiplexeur apte à séparer spatialement les canaux d'un faisceau optique et un réseau de dispositifs optiques à routage de polarisation aptes à diriger les différents canaux (1a, 1b, 1c, 2a, 2b, 2c) entrant sur les sorties (3a, 3b, 3c, 4a, 4b, 4c), **caractérisé en ce que** les dispositifs optiques à routage de polarisation sont des dispositifs conformes à l'une des revendications 1 à 15.

FIG.1

FIG.2

FIG.3

X

ne

z : direction de propagation

no

Y

## FIG_4

X

ne

z : direction de propagation

no

Y

## FIG_5

intermédiaire

Nematique
FLC
incident
transmis

## FIG_6

FIG.7

FIG.8

FIG.9

FIG_10

FIG_11

FIG_12

FIG_13

FIG_14

FIG_15

FIG_16

FIG.17

FIG.18

FIG. 19

FIG. 20

FIG. 21

FIG.22

FIG.23

**Office européen**
**des brevets**

**RAPPORT DE RECHERCHE EUROPEENNE**

Numéro de la demande
EP 02 29 2610

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | NABEEL A RIZA: "HIGH-OPTICAL-ISOLATION LOW-LOSS MODERATE-SWITCHING-SPEED NEMATIC LIQUID-CRYSTAL OPTICAL SWITCH" OPTICS LETTERS, OPTICAL SOCIETY OF AMERICA, WASHINGTON, US, vol. 19, no. 21, 1 novembre 1994 (1994-11-01), pages 1780-1782, XP000475861 ISSN: 0146-9592 * page 1781, colonne de droite; figure 1B * | 1-6,8 | G02F1/31 G02F1/1347 |
| X | US 5 477 350 A (RIZA NABEEL A ET AL) 19 décembre 1995 (1995-12-19) * colonne 6, ligne 45 - colonne 7, ligne 50; figure 3A * | 1-4,10, 14 | |
| X | WO 00 46631 A (COLORLINK INC) 10 août 2000 (2000-08-10) * page 34, ligne 08 - ligne 20 * * page 6, ligne 14 - page 7, ligne 16 * * page 21, ligne 26 - page 23, ligne 23 * | 1-7,16 | |
| X | WO 98 06002 A (DEUTSCHE TELEKOM AG ;DULTZ WOLFGANG (DE); HAASE WOLFGANG (DE); WEY) 12 février 1998 (1998-02-12) * page 9, ligne 05 - page 11, ligne 22; figure 1 * | 1-4 | DOMAINES TECHNIQUES RECHERCHES (Int.Cl.7) G02F |
| A | PATENT ABSTRACTS OF JAPAN vol. 011, no. 366 (P-641), 28 novembre 1987 (1987-11-28) -& JP 62 138838 A (MITSUBISHI ELECTRIC CORP), 22 juin 1987 (1987-06-22) * abrégé * | 1-4,10, 13,19 | |

-/--

Le présent rapport a été établi pour toutes les revendications

| Lieu de la recherche | Date d'achèvement de la recherche | Examinateur |
|---|---|---|
| LA HAYE | 16 janvier 2003 | Diot, P |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
   ...................................................................
& : membre de la même famille, document correspondant

EPO FORM 1503 03.82 (P04C02)

**EP 1 315 026 A1**

**Office européen des brevets**    **RAPPORT DE RECHERCHE EUROPEENNE**

Numéro de la demande

EP 02 29 2610

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 01 23912 A (SPECTRASWITCH INC) 5 avril 2001 (2001-04-05) * page 26, ligne 04 - page 29, ligne 18 * * page 34, ligne 01 - ligne 17; figure 9 * ----- | 1-19 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 16 janvier 2003 | Diot, P |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**   EP 02 29 2610

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-01-2003

| Document brevet cité au rapport de recherche | | Date de publication | Membre(s) de la famille de brevet(s) | | Date de publication |
|---|---|---|---|---|---|
| US 5477350 | A | 19-12-1995 | AUCUN | | |
| WO 0046631 | A | 10-08-2000 | US | 6141071 A | 31-10-2000 |
| | | | AU | 2868400 A | 25-08-2000 |
| | | | WO | 0046631 A1 | 10-08-2000 |
| WO 9806002 | A | 12-02-1998 | WO | 9806002 A1 | 12-02-1998 |
| JP 62138838 | A | 22-06-1987 | AUCUN | | |
| WO 0123912 | A | 05-04-2001 | AU | 3071401 A | 30-04-2001 |
| | | | EP | 1212640 A2 | 12-06-2002 |
| | | | WO | 0123912 A2 | 05-04-2001 |

EPO FORM P0460

Pour tout renseignement concernant cette annexe : voir Journal Officiel de l'Office européen des brevets, No.12/82